# DEMANDE DE BREVET EUROPEEN

(11) **EP 0 932 292 A1**
(43) Date de publication de la demande: **28.07.1999**
(21) Numéro de dépôt: 99400132.9
(22) Date de dépôt: 21.01.1999
(51) Int. Cl.: H04N 1/00, H04M 1/72

(54) **Réseau local de téléphonie sans fil et base et terminal mobile de communication d'un tel réseau**

(30) Priorité: 23.01.1998 FR 9800706
(71) Demandeur: SAGEM SA, 75116 Paris (FR)
(72) Inventeur: Frederic, Alain, 95610 Eragny sur Oise (FR)
(74) Mandataire: Bloch, Gérard

(57) **Abrégé**

Le réseau local de téléphonie sans fil comporte une base (1) formant machine de bureau (télécopieur, enregistreur vocal, messagerie, agenda) et un terminal mobile (2) qui comporte un pupitre de commande de la base (1), celle-ci comportant une pluralité d'annuaires pour une pluralité de terminaux de commande, agencés pour commander des moyens de lancement d'appels à travers des moyens de liaison avec un réseau téléphonique.

## Description

L'invention concerne le domaine de la domotique et plus précisément celui des terminaux de communication reliés au réseau téléphonique.

Si l'on prend l'exemple d'un télécopieur, celui-ci comporte un ensemble spécifique à la télécopie et un combiné téléphonique associé à un clavier de numérotation et à un écran de relations homme-machine, intégrés au télécopieur.

Une telle structure nécessite la présence de l'utilisateur à côté du télécopieur chaque fois qu'il veut l'exploiter, ce qui est une contrainte.

La demanderesse a donc cherché une solution permettant de s'affranchir de cette contrainte, que ce soit pour un télécopieur ou pour tout autre terminal de communication.

A cet effet, l'invention concerne tout d'abord une base, constituée d'une machine de bureau, pour réseau local de téléphonie sans fil, à associer, dans le réseau, à une pluralité de terminaux mobiles de commande de la base, un terminal comportant un pupitre de commande de la base et étant agencé pour commander la base qui est également agencée à cet effet et qui comporte, pour les terminaux, une pluralité d'annuaires, des moyens de lancement d'appels, commandés par les annuaires, et des moyens de liaison avec un réseau téléphonique pour le lancement des appels.

Ainsi, et pour reprendre l'exemple d'un télécopieur, un utilisateur de celui-ci pourra par exemple commander au pupitre, à destination d'un abonné dans l'annuaire, l'émission de messages de télécopie préalablement constitués et mémorisés dans la base formant télécopieur ou bien saisis par le pupitre du terminal. Une fonction de boîte à lettres de télécopies ou de courrier électronique ou de répondeur-enregistreur peut encore être envisagée, avec toujours l'exploitation à distance évoquée ci-dessus.

Un avantage de l'invention réside dans le fait que l'accès à la base machine de bureau peut être multiple, du fait du déport possible des commandes de la base dans plusieurs terminaux. Tout se passe, pour chaque utilisateur de terminal, comme s'il disposait localement de la machine de bureau.

L'invention concerne aussi un réseau local de téléphonie sans fil comportant au moins un terminal mobile et une base selon l'invention.

L'invention concerne enfin un terminal mobile pour réseau local de téléphonie sans fil selon l'invention, dans lequel des moyens de relation homme-machine sont agencés pour commander des moyens d'appel radio de la base qui comportent des moyens de commande de la base et des moyens d'adressage pour commander, dans la base, des moyens d'accès à cette base.

L'invention sera mieux comprise à l'aide de la description suivante d'une forme de réalisation préférée du réseau avec la base et des terminaux, de l'invention, en référence au dessin annexé, sur lequel :
- la figure 1 représente schématiquement un réseau local de téléphonie sans fil avec la base et des terminaux de l'invention,
- la figure 2 est un schéma par blocs de la base de la figure 1, et
- la figure 3 est un schéma par blocs du terminal 2 de la figure 1.

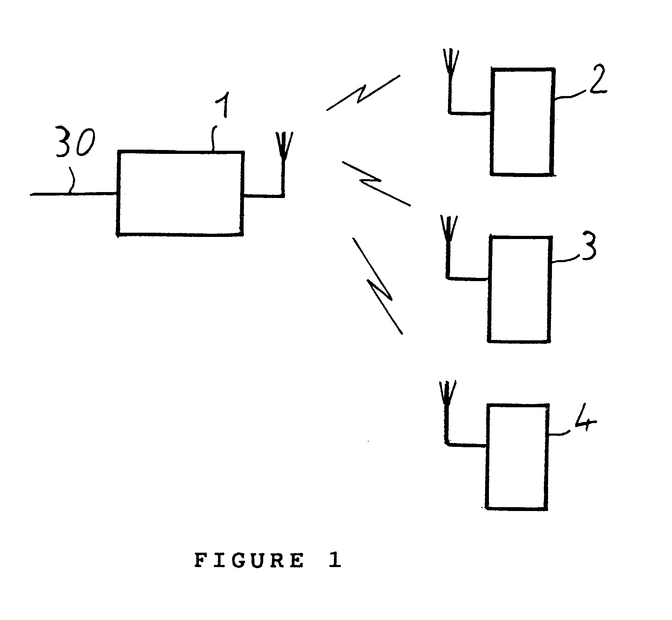

La base 1 de la figure 1 relie une ligne 30 du réseau téléphonique commuté à un réseau radio local comportant une pluralité de terminaux radio, référencés 2, 3 et 4.

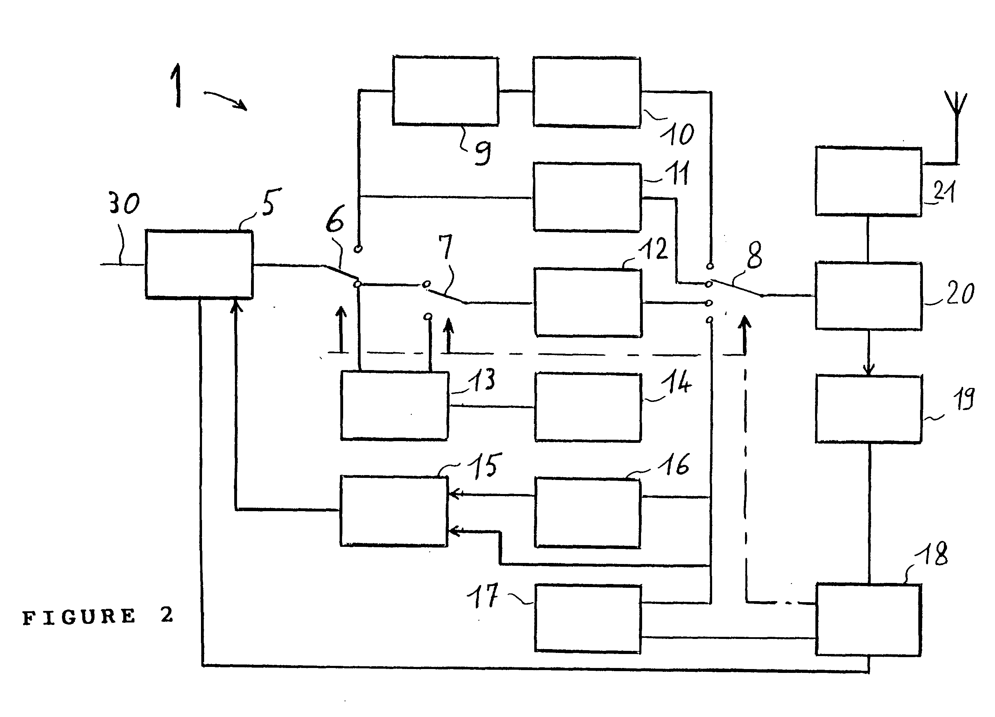

Comme le montre la figure 2, la base 1 comporte une interface de ligne 5 reliée, d'un côté, à la ligne 30 et, de l'autre côté, au pied d'un circuit d'aiguillage 6, représenté sous forme de contact mobile de relais, dans un but de clarté.

Un circuit 20, associé à un émetteur récepteur radio 21, gère un réseau radio local, et précisément ici des trames temporelles selon la norme DECT.

Un circuit 19, de réception de commandes provenant des terminaux 2, 3, 4 à travers des voies temporelles de la trame, interprète ces commandes et fournit les résultats correspondants à un circuit 18, ici un microprocesseur, de commande de la base 1, et dont les liaisons avec les autres circuits ne sont pas toutes représentées.

Dans cet exemple, la base 1 intègre plusieurs appareils de bureau, ou un appareil de bureau multifonctions, avec des circuits de traitement pour les fonctions de télécopie, messages de données, téléphonie, enregistreur vocal, agenda et paramètres d'exploitation, dont le détail va maintenant être donné.

L'ensemble référencé 9, relié à une première branche de l'aiguilleur 6, traite les fonctions de télécopie, c'est-à-dire en particulier la saisie de données de télécopie, l'édition et la gestion du protocole de transmission. Un circuit 10, générateur de carte-pixels, ou images, est relié en sortie à l'ensemble 9 et, en entrée, au réseau local, précisément au circuit 20 à travers une première branche d'un commutateur 8 dont le pied est relié au circuit 20.

Une mémoire 11, reliée à la branche ci-dessus de l'aiguilleur 6, stocke des messages de données tels que courrier électronique ou images et est de même reliée au réseau local par une deuxième branche de l'aiguilleur 8.

Une seconde branche de l'aiguilleur 6 est reliée à une première branche d'un aiguilleur 7 relié par son pied à un circuit convertisseur ADPCM 12 (Modulation, Adaptative par Différence, par Codage par Impulsions), relié à une troisième branche de l'aiguilleur 8.

Les secondes branches des aiguilleurs 6 et 7 sont reliées chacune à une mémoire 14 d'enregistreur vocal, à travers un circuit compresseur/décompresseur de la parole 13.

Un annuaire ou répertoire 16, commandé par le circuit réseau 20 à travers une quatrième branche de l'aiguilleur 8, est associé à une mémoire 17 de paramètres, commandée de même. Un circuit de numérotation 15, relié à l'interface de ligne 5, est commandé par l'annuaire 16, ou directement, à travers le circuit de réseau local 20. Le microprocesseur 18, qui peut en fait regrouper en un seul ensemble les fonctions des circuits logiques indiqués ci-dessus, est de même relié à l'interface 5 pour échanger des signalisations de ligne afin de gérer la base 1. Le microprocesseur 18 est aussi relié à cet effet aux divers circuits et en particulier commande les aiguilleurs 6, 7, 8 et accède à la mémoire 17. Il constitue ainsi une liaison d'entrée aux divers circuits 9 à 17, permettant de commander ceux-ci.

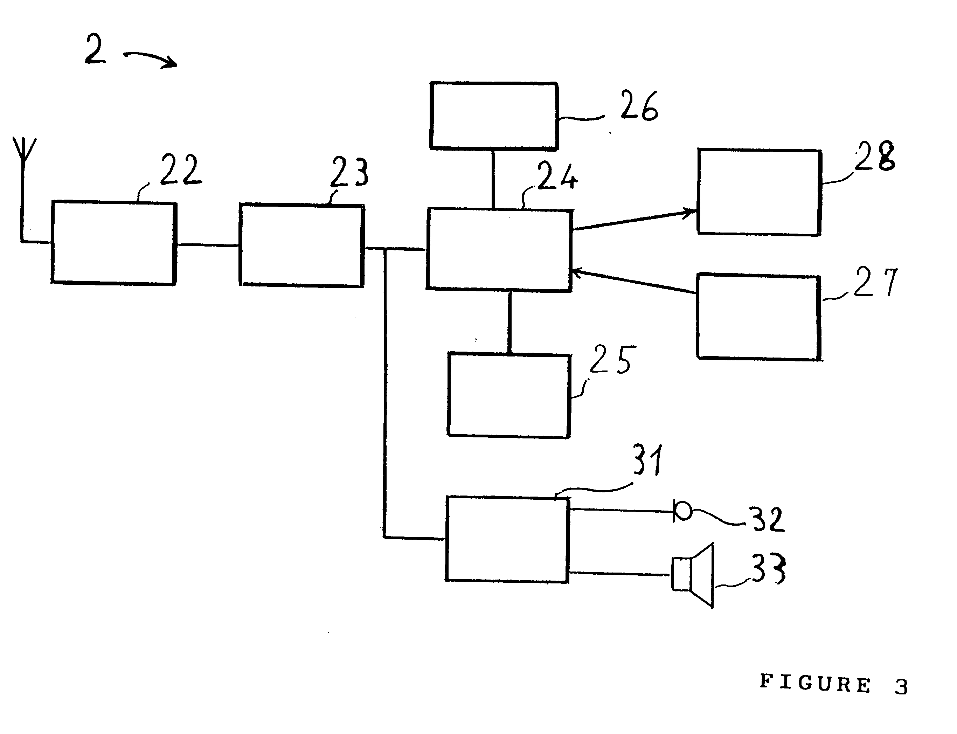

La figure 3 représente schématiquement un terminal tel que 2. Il comporte un circuit radio émetteur-récepteur 22, complémentaire du circuit 21, associé à un circuit 23 de gestion des trames radio. Un circuit convertisseur ADPCM 31 relie le circuit 23 à un microphone 32 et à un haut-parleur 33. Un microprocesseur d'unité centrale 24, contrôlant l'ensemble des circuits, commande un écran 28 de relations homme-machine et est relié en entrée à un clavier ou pupitre de commande 27. Une mémoire 25, reliée au microprocesseur 24, contient un identifiant du terminal 2, permettant à la base 1 de l'identifier parmi l'ensemble des terminaux 2 à 4. Un circuit d'adressage 26 est relié au microprocesseur 24 et fournit à celui-ci des adresses de commande des circuits aiguilleurs 6, 7 et 8, à partir des commandes du clavier 27, afin d'accéder à toute fonction d'exploitation voulue (9 - 17).

Le fonctionnement de l'ensemble du réseau, base 1 et terminaux 2 à 4, va maintenant être expliqué plus en détails.

La base 1 est exploitée à distance depuis les terminaux 2 à 4, et plus précisément à partir des moyens de relation homme-machine, écran 26 et clavier ou pupitre 27, de ceux-ci, qui permettent de commander, depuis chaque terminal 2 à 4, les divers circuits 9 à 17 relatifs aux diverses fonctions de traitement de messages ou données de la base 1. Le pupitre 27 de relations homme-machine d'un terminal comme 2, qui commande la base 1, est ainsi déporté à travers le réseau local ou, en d'autres termes, le réseau local est inséré entre les circuits 9 à 17 de machine de bureau et les moyens de relations homme-machine 27 - 28, si bien que la liaison de commande correspondante traverse donc le réseau local.

Par exemple, un message de télécopie peut être saisi à partir du pupitre 27 et, par appel radio de la base 1 depuis le microprocesseur 24 à travers les circuits 23 et 22, le circuit 26 commande le positionnement de l'aiguilleur 8 pour accéder au circuit 10, afin de lui transmettre les commandes et des données voulues. Les caractères saisis sont ainsi transmis au circuit 10 pour conversion au format image pixels. Le microprocesseur 24, servant de relais de commande au pupitre 27 pour commander certains des circuits d'exploitation (9 - 17), commande à cet effet le microprocesseur 18 pour qu'il positionne comme il convient les aiguilleurs 6 et 8 et qu'il établisse une communication départ sur la ligne 30.

Dans le cas de courrier électronique en mode caractères, émis depuis le pupitre 27 ou reçu de la ligne 30, l'aiguilleur 8 est positionné en conséquence pour que les terminaux 2 à 4 accèdent à la mémoire 11. L'écran 28 permet de prendre connaissance des télécopies et du courrier électroniques reçus, ici par balayage d'une fenêtre, car l'écran 28 est ici de taille limitée. La mémoire 25, d'identité, sert alors à transmettre celle-ci à la base 1 pour sélectionner, dans la mémoire 11, une zone mémoire réservée au terminal 2 à 4 considéré et ainsi le commander spécifiquement les circuits 9 à 17 d'exploitation lorsque des données personnalisées doivent être traitées à l'intérieur d'une fonction globale. Il en est donc de même pour les mémoires 14, 16, 17.

Dans le cas des communications radio, le circuit convertisseur 12 est relié au circuit d'interface 5 par les aiguilleurs 6 et 7 et au circuit 20 par l'aiguilleur 8.

La mémoire 14 offre une fonction de répondeur-enregistreur à données mémorisées compressées par le circuit 13. La seconde branche de l'aiguilleur 6 la relie à l'interface de ligne 5 (enregistrement) depuis la ligne 30, tandis que la seconde branche de l'aiguilleur 7 en permet la lecture par le terminal 2 à 4 concerné, à travers le circuit de codage ADPCM 12. Inversement, un terminal 2 à 4 peut aussi y mémoriser un message permanent d'accueil vocal, ou un message, à émettre ultérieurement.

Comme indiqué précédemment, l'annuaire ou agenda 16 personnalisé par terminal 2 à 4 permet d'appeler un correspondant externe par le circuit 15, à partir d'une numérotation abrégée. L'une des mémoires de la base 1 peut en particulier comporter un agenda pour des notes personnelles et des rendez-vous.

La base 1 formant appareil de bureau est ainsi multifonctionnelle et multiutilisateurs.

## Revendications

1. Base, constituée d'une machine de bureau, pour réseau local de téléphonie sans fil, à associer, dans le réseau, à une pluralité de terminaux mobiles (2) de commande de la base (1), un terminal (2) comportant un pupitre de commande de la base (1) et étant agencé pour commander la base (1) qui est également agencée à cet effet et qui comporte, pour les terminaux (2), une pluralité d'annuaires (16), des moyens de lancement d'appels (15), commandés par les annuaires (16), et des moyens (5) de liaison avec un réseau téléphonique pour le lancement des appels.

2. Base selon la revendication 1, agencée pour recevoir, du réseau, des commandes comportant des données d'identification d'un terminal de commande et pour exploiter ces données.

3. Base selon l'une des revendications 1 et 2, comportant des moyens de traitement de télécopies (9, 10).

4. Base selon la revendication 3, comportant des moyens de mémorisation de télécopies (11).

5. Base selon l'une des revendications 1 à 4, comportant des moyens de traitement de messages vocaux (13, 14).

6. Réseau local de téléphonie sans fil comportant au moins un terminal mobile (2) et une base (1) selon la revendication 1.

7. Terminal mobile pour réseau local de téléphonie selon la revendication 6, dans lequel des moyens de relation homme-machine (27, 28) sont agencés pour commander des moyens (22 - 26) d'appel radio de la base qui comportent des moyens (24) de commande de la base (9 - 17) et des moyens d'adressage (26) pour commander, dans la base, des moyens d'accès à cette base (9 - 17).

8. Terminal selon la revendication 7, dans lequel les moyens d'appel comportent des moyens (25) d'identification du terminal, agencés pour commander sélectivement la base (9 - 17).
